# DEMANDE DE BREVET EUROPEEN

(11) **EP 2 261 491 A1**
(43) Date de publication de la demande: **15.12.2010**
(21) Numéro de dépôt: 10290280.6
(22) Date de dépôt: 27.05.2010
(51) Int. Cl.: F02D 41/40, F02B 23/06, F02F 3/14

(54) **Procédé d'injection de carburant dans un moteur à combustion interne à auto-inflammation à injection directe**

(30) Priorité: 03.06.2009 FR 0902660
(71) Demandeur: IFP Energies nouvelles, 92852 Rueil-Malmaison Cedex (FR)
(72) Inventeur: Kashdan, Julian, 92700 Colombes (FR)

(57) **Abrégé**

La présente invention concerne un procédé d'injection de carburant dans un moteur à combustion interne à injection directe, notamment de type Diesel, comportant un cylindre (10) fermé par une culasse (16), un piston (12) comportant un bol (18), et un injecteur de carburant (48).

Selon l'invention, le procédé consiste à introduire le carburant dans le bol revêtu d'un revêtement thermiquement isolant en au moins deux injections successives rapprochées de manière à réaliser une combustion à basse température du mélange carburé.

## Description

La présente invention se rapporte à un procédé d'injection de carburant dans un moteur à combustion interne à auto-inflammation à injection directe, notamment de type Diesel.

Elle concerne plus particulièrement les moteurs de type Diesel fonctionnant en combustion à basse température du mélange carburé, plus communément connue sous le terme de combustion LTC (Low Temperature Combustion).
Ce type de combustion LTC a notamment pour avantage de limiter la production de polluants résultant de la combustion et en particulier de limiter la production d'oxydes d'azote (NOx) et de particules.
Cette combustion est généralement réalisée par l'utilisation d'une grande quantité de gaz d'échappement recirculés (EGR) à l'admission du moteur pour abaisser les températures de combustion permettant de réduire les émissions de NOx. En outre, l'emploi d'un fort pré-mélange entre l'air et le carburant a pour effet de réaliser un mélange relativement homogène avant la combustion permettant ainsi de limiter la production de particules.

Cependant, ce type de combustion a pour inconvénient majeur de produire des niveaux d'émissions de HC élevés qui sont rejetés à l'échappement du moteur. Cette production de HC est liée essentiellement aux basses températures de combustion, qui ne permettent pas l'oxydation totale des HC en CO puis en CO2.

Comme cela est déjà décrit dans la demande de brevet CN 1 434 193, il est connu un tel moteur avec un cylindre à l'intérieur duquel coulisse, en un mouvement rectiligne alternatif, un piston portant un bol creux. Une chambre de combustion d'un mélange carburé est ainsi délimitée par la paroi du cylindre, la face de la culasse en vis du piston, la face supérieure de ce piston et les parois du bol.

Tel que cela est mieux explicité dans le document précité, il est prévu de minimiser les pertes thermiques (pertes de chaleur générée lors de la combustion de ce mélange carburé) à travers les parois de la chambre de combustion du moteur. Pour cela, les surfaces du bol sont couvertes au moins en partie par un revêtement isolant thermiquement, par exemple de type céramique, caractérisé notamment par une conductivité thermique très faible.
De ce fait, ce revêtement limite la perte de chaleur générée lors de la combustion du mélange carburé, ce qui permet de maintenir des températures de combustion élevées. Ces niveaux élevés de températures permettent ainsi de favoriser une meilleure oxydation des hydrocarbures imbrûlés (HC) et des monoxydes de carbone (CO). De plus, l'utilisation d'un tel revêtement entraîne une élévation des températures des parois de la chambre de combustion, ce qui a pour effet de limiter la formation de films liquides de carburant qui se forment notamment sur la surface du piston. En effet, ces films liquides de carburant sont une source non négligeable de production de HC, en particulier dans le type de combustion LTC.

Cette augmentation des températures entraîne cependant des inconvénients néfastes à la combustion, comme une réduction du délai d'auto-inflammation du mélange carburé et une augmentation de la vitesse de combustion. Ces vitesses de combustion excessives, qui entraînent généralement des pics de dégagement d'énergie élevés, sont pénalisantes car elles sont associées à des niveaux élevés de bruit de combustion (ou bruit moteur).

La présente invention se propose de remédier aux inconvénients précités grâce à un procédé d'injection de carburant qui permet de réduire les niveaux de bruit de combustion.

A cet effet, l'invention concerne un procédé d'injection de carburant dans un moteur à combustion interne à injection directe, notamment de type Diesel, comportant un cylindre fermé par une culasse, un piston comportant un bol, et un injecteur de carburant, **caractérisé en ce qu**'il consiste à introduire le carburant dans le bol revêtu d'un revêtement thermiquement isolant en au moins deux injections successives rapprochées de manière à réaliser une combustion à basse température du mélange carburé.

Le procédé peut consister à introduire le carburant en des injections successives avec un délai correspondant à un angle de rotation de vilebrequin compris entre 1° et 10° entre la fin d'une injection et le début de l'injection suivante.

Le procédé peut consister à introduire le carburant en des injections successives de quantité de carburant égale entre elles.

Le procédé peut consister à introduire le carburant en des injections successives de quantité de carburant différente entre elles.

Le procédé peut consister à introduire le carburant en des injections successives de quantité de carburant croissante entre elles.

Le procédé peut consister à introduire le carburant en des injections successives de quantité de carburant décroissante entre elles.

Le procédé peut consister à introduire le carburant en des injections successives de quantité de carburant comprise entre 5% et 50% de la quantité globale du carburant.

Les autres caractéristiques et avantages de l'invention vont apparaître à la lecture de la description qui va suivre, donnée à titre uniquement illustratif et non limitatif, et à laquelle sont annexées :
- la figure 1 qui montre une vue locale d'une partie d'un moteur à combustion interne utilisant le procédé selon l'invention et
- la figure 2 qui montre des courbes illustrant le dégagement d'énergie (J) en fonction de l'angle du vilebrequin (°V) pour des moteurs de l'art antérieur et pour un moteur utilisant le procédé selon l'invention.

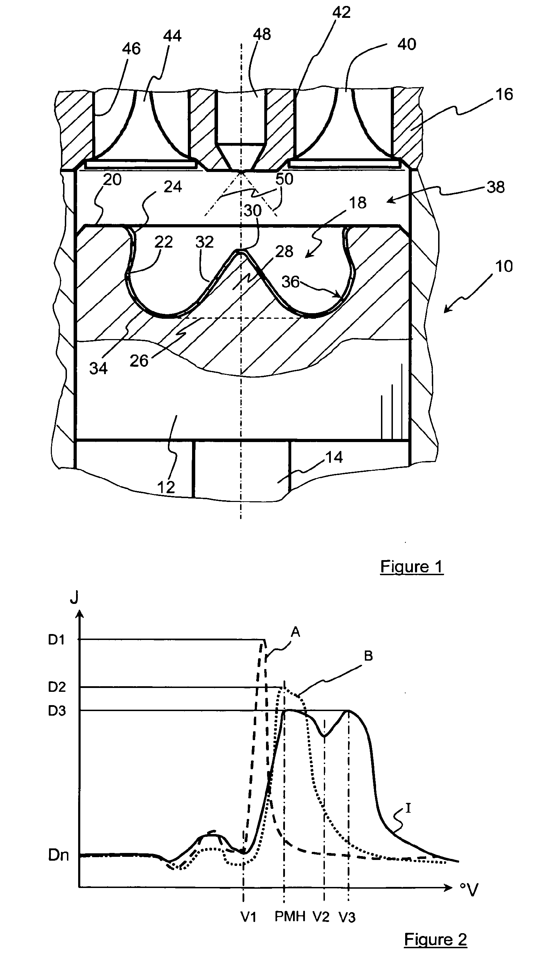

La figure 1 illustre, en coupe partielle locale, un moteur à combustion interne à injection directe à autoallumage fonctionnant avec un mode de combustion à basse température. Ce moteur est préférentiellement de type Diesel mais cela n'écarte en aucune manière les autres types de moteur, comme ceux fonctionnant avec de l'essence ou un carburant gazeux (GNV, GPL,..).

Ce moteur comprend au moins un cylindre 10 à l'intérieur duquel coulisse un piston 12 en un mouvement translatif alternatif sous l'effet d'une bielle 14 raccordée à un vilebrequin (non représenté), et une culasse 16 venant fermer le haut du cylindre.
Le haut du piston comprend un bol concave 18 qui est délimité par la face supérieure 20 du piston, une surface latérale 22 raccordée à la face 20 par un congé 24 et un fond de bol 26. De manière préférentielle, un téton 28, saillant en direction de la culasse 16, est logé l'intérieur de ce bol. Ce téton, de forme générale tronconique, est situé sensiblement au centre de ce bol. Le sommet arrondi 30 de ce téton se poursuit, en direction du fond de bol 26 par un flanc incliné 32 sensiblement rectiligne, puis par une partie curviligne 34 venant raccorder le flanc 32 au fond de bol 26 et à la surface latérale 22.
Les différentes parois de ce bol sont couvertes par un revêtement 36 isolant thermiquement permettant de minimiser les pertes thermiques au travers de ces parois.
Avantageusement, ce revêtement est du type céramique et notamment du groupe des nitrures de silicium. Pour cela, la suite de la description fera mention, uniquement à titre d'exemple illustratif, de revêtement céramique pour ce bol.

Ainsi, une chambre de combustion 38 est formée dans ce cylindre en étant délimitée par la portion de la culasse 16 en regard du piston 12, la surface périphérique interne du cylindre 10, la face supérieure 20 du piston 10, et les parois de bol couvertes par le revêtement céramique 36.

La culasse 16 porte au moins un moyen d'admission avec une soupape d'admission 40 et une tubulure d'admission 42, et au moins un moyen d'échappement avec une soupape d'échappement 44 et une tubulure d'échappement 46.
Des moyens d'injection de carburant sont disposés dans la culasse 16 de manière à introduire du carburant à l'intérieur de la chambre de combustion 38. Ces moyens comportent un injecteur de carburant 48, de préférence un injecteur multi-jets, qui comprend au voisinage de son nez une multiplicité d'orifices à travers desquels est pulvérisé le carburant dans la chambre de combustion sous forme de jets 50.
Avantageusement, l'axe de l'injecteur est placé de manière coaxiale à l'axe du téton de manière à ce que les jets de carburant soient introduits à l'intérieur du bol. Ainsi, le bol, le téton et l'injecteur sont placés coaxialement les uns par rapport aux autres.

On se rapporte maintenant à la figure 2 qui montre des courbes illustrant le dégagement d'énergie (J) en fonction de l'angle du vilebrequin (°V) pour un moteur de l'art antérieur (A), en trait tiret, sans injection multiple de carburant et comportant un piston avec un bol revêtu d'un revêtement céramique, pour un autre moteur de l'art antérieur (B), en trait pointillé, sans injection multiple de carburant et comportant un piston avec un bol dépourvu de revêtement céramique, et pour un moteur utilisant le procédé selon l'invention (I), en trait fort.

Ainsi, pour le moteur de l'art antérieur avec le dégagement d'énergie de la courbe A, du carburant est introduit, en une seule injection principale, dans la chambre de combustion par l'injecteur 48 à un angle de vilebrequin V1 voisin du Point Mort Haut compression de ce moteur (PMH) et avant ce PMH. Plus particulièrement, ce carburant est introduit à l'intérieur du bol 18 revêtu d'un revêtement céramique pour se mélanger avec les fluides (air et EGR) qui y sont contenus. Ce carburant permet de réaliser un mélange carburé qui est disposé à s'auto-enflammer sous l'effet de la compression par le piston. Cette combustion permet de générer un dégagement d'énergie qui s'accroît brutalement du dégagement d'énergie Dn, résultant de la phase de compression du moteur, pour arriver à un dégagement maximal D1 avant le PMH du moteur.
Comme déjà mentionné plus haut, un tel dégagement important d'énergie entraîne notamment une génération de niveaux élevés de bruit de combustion dans la chambre de combustion. En effet, l'utilisation d'un bol revêtu d'un revêtement céramique augmente la vitesse de combustion du mélange carburé en entraînant une augmentation du dégagement d'énergie ainsi que des niveaux de bruit.

Pour le dégagement d'énergie selon un autre moteur de l'art antérieur de la courbe B, le carburant est introduit, comme précédemment décrit, à l'intérieur du bol 18 dépourvu de revêtement céramique pour réaliser un mélange carburé. Lors de l'auto inflammation de ce mélange carburé, le dégagement d'énergie augmente du point Dn pour arriver à un dégagement maximal D2 au voisinage du PMH du moteur qui est inférieur à celui du dégagement maximale de la courbe A.
Ce dégagement d'énergie entraîne une production de niveaux de bruit de combustion moins élevés que celui de la courbe A mais engendre des émissions élevées de HC.

Afin de palier ce problème, l'utilisation des stratégies d'injection multiples rapprochées selon l'invention permet de moduler ce dégagement d'énergie afin de limiter le bruit de combustion à des niveaux acceptables.
De plus, la combinaison d'une chambre de combustion avec un bol comportant un revêtement en céramique associée et ces stratégies d'injection multiples rapprochées permet également d'améliorer le compromis HC/CO/bruit pour des moteurs fonctionnant selon le mode de combustion Diesel LTC.

Plus précisément, il est prévu d'adopter, pour le moteur utilisant le procédé selon l'invention (courbe I), une stratégie d'injection avec au moins deux injections successives rapprochées de carburant à partir de l'angle de vilebrequin V1.

La courbe I de la figure 2 illustre le procédé selon l'invention avec les dégagements d'énergie correspondant à la quantité globale de carburant qui est partagée en deux injections successives de carburant équivalentes à la quantité globale de carburant des moteurs de l'art antérieur. Une première quantité de carburant est injectée à l'angle de vilebrequin V1 puis une seconde quantité de ce carburant est injectée à l'angle de vilebrequin V2 de manière très rapprochée de l'injection initiale de carburant, préférentiellement dans un délai correspondant à un angle de rotation de vilebrequin compris entre 1° et 10° entre la fin de l'injection précédente et le début de cette deuxième injection.
Ainsi, la première injection de carburant permet d'obtenir, au PMH, une combustion du mélange carburé avec un dégagement d'énergie D2 inférieur au dégagement d'énergie D1 du moteur de l'art antérieur (réduction de dégagement d'énergie de l'ordre du tiers). Ce dégagement d'énergie D2 diminue jusqu'à l'angle de vilebrequin V2 où la deuxième quantité de carburant est injectée dans la chambre de combustion. Cette deuxième quantité de carburant, qui est ici sensiblement identique à la première, permet de réaliser à l'angle de vilebrequin V3 une combustion du mélange carburé avec un dégagement d'énergie qui est comparable à celui de la combustion du mélange carburé de la première injection.
Il peut aussi être envisagé de réaliser une multiplicité d'injections de carburant qui soit supérieure à deux injections.

Dans ce cas, il peut être prévu que la quantité totale de carburant à injecter se réalise selon des injections de carburant successives rapprochées avec des quantités de carburant sensiblement identiques entre elles jusqu'à obtenir l'injection souhaitée de la quantité totale de carburant équivalente au moteur de l'art antérieur.

Ces quantités de carburant à injecter successivement peuvent être également différentes entre elles, telles que des quantités croissantes ou décroissantes les unes par rapport aux autres entre elles jusqu'à l'obtention de la quantité globale de carburant à injecter dans la chambre de combustion.

Avantageusement dans le cas de quantités décroissantes, ces quantités peuvent être comprise entre 5% et 40% de la quantité de carburant de l'injection précédente.
A titre d'exemple, il peut être envisagé, pour trois injections successives, d'injecter 50% de la quantité globale lors d'une première injection à l'angle V1 avant le PMH puis 30% de cette quantité globale après un angle de rotation de vilebrequin de 5° à l'angle V2 et, lors de la troisième injection, à injecter la quantité restante de carburant (soit 20% de la quantité globale) après un angle de rotation de vilebrequin de 5° suivant la deuxième injection et avant le PMB.

Ces injections successives peuvent être régulièrement reparties entre l'angle V1 et le PMB et leur nombre peut être différents avant et après le PMH.

Ces injections multiples rapprochées de carburant permettent de pouvoir moduler les pics de dégagement d'énergie et donc les bruits de combustion tout en réduisant les émissions de HC et en produisant une faible quantité de NOx, notamment sur les points de fonctionnement du moteur les moins chargés.

La présente invention n'est pas limitée à l'exemple décrit mais englobe toutes variantes et tous équivalents couverts par la présente invention.

## Revendications

1. Procédé d'injection de carburant dans un moteur à combustion interne à injection directe, notamment de type Diesel, comportant un cylindre (10) fermé par une culasse (16), un piston (12) comportant un bol (18), et un injecteur de carburant (48), **caractérisé en ce qu'**il consiste à introduire le carburant dans le bol revêtu d'un revêtement thermiquement isolant en au moins deux injections successives rapprochées de manière à réaliser une combustion à basse température du mélange carburé.

2. Procédé d'injection de carburant selon la revendication 1, **caractérisé en ce qu'**il consiste à introduire le carburant en des injections successives avec un délai correspondant à un angle de rotation de vilebrequin compris entre 1° et 10° entre la fin d'une injection et le début de l'injection suivante.

3. Procédé d'injection de carburant selon la revendication 1 ou 2, **caractérisé en ce qu'**il consiste à introduire le carburant en des injections successives de quantité de carburant égale entre elles.

4. Procédé d'injection de carburant selon la revendication 1 ou 2, **caractérisé en ce qu'**il consiste à introduire le carburant en des injections successives de quantité de carburant différente entre elles.

5. Procédé d'injection de carburant selon la revendication 4, **caractérisé en ce qu'**il consiste à introduire le carburant en des injections successives de quantité de carburant croissante entre elles.

6. Procédé d'injection de carburant selon la revendication 4, **caractérisé en ce qu'**il consiste à introduire le carburant en des injections successives de quantité de carburant décroissante entre elles.

7. Procédé d'injection de carburant selon l'une des revendications précédentes, **caractérisé en ce qu'**il consiste à introduire le carburant en des injections successives de quantité de carburant comprise entre 5% et 50% de la quantité globale du carburant.
